# FASCICULE DE BREVET EUROPEEN

(11) **EP 2 554 412 B1**
(45) Date de publication et mention de la délivrance du brevet: **26.02.2014**
(21) Numéro de dépôt: 12173226.7
(22) Date de dépôt: 22.06.2012
(51) Int. Cl.: B60H 1/00

(54) **Appareil de chauffage, ventilation et/ou climatisation à encombrement réduit.**
Anlage zur Beheizung, Belüftung und/oder Klimatisierung mit reduziertem Platzbedarf
Compact heating, ventilation and/or air-conditioning system

(30) Priorité: 01.08.2011 FR 1102403
(43) Date de publication de la demande: 06.02.2013
(73) Titulaire: Valeo Systemes Thermiques, 78320 Le Mesnil Saint Denis (FR)
(72) Inventeur: Guigou, Pascal, 92260 FONTENAY AUX ROSES (FR); Pierres, Philippe, 78990 ELANCOURT (FR); Liska, Jan, 78320 LE MESNIL SAINT DENIS (CZ)
(74) Mandataire: Vieillevigne, Sébastien Nicolas Bernard

(56) Documents cités:
- EP-A1- 2 236 327
- DE-A1-102009 034 842
- DE-A1-102010 030 181

## Description

La présente invention concerne un appareil de chauffage, ventilation et/ou climatisation, notamment pour un véhicule automobile. En particulier, elle est propre à un appareil de chauffage, ventilation et/ou climatisation dont l'encombrement est réduit.

Un appareil de chauffage, ventilation et/ou climatisation comprend:
- un boîtier d'entrée d'air, ou module d'entrée d'air, destiné à admettre un flux d'air dans l'appareil de chauffage, ventilation et/ou climatisation,
- un boîtier de conditionnement thermique, ou module de conditionnement thermique, destiné à traiter thermiquement le flux d'air admis dans l'appareil de chauffage, ventilation et/ou climatisation, et
- un boîtier de distribution d'air, ou module de distribution d'air, destiné à assurer la diffusion du flux d'air, traité dans l'appareil de chauffage, ventilation et/ou climatisation, vers diverses zones d'un habitacle du véhicule.

Le document EP 2 236 327, qui est considéré comme l'art antérieur le plus proche, divulgue un tel appareil.

L'appareil de chauffage, ventilation et/ou climatisation est agencé dans l'habitacle du véhicule, plus particulièrement sous une planche de bord disposée dans la zone avant de l'habitacle du véhicule.

Le volume de la planche de bord a pour conséquence de diminuer l'espace intérieur de l'habitacle du véhicule disponible pour accueillir les occupants du véhicule. Par ailleurs, de nombreux équipements additionnels sont agencés dans l'habitacle du véhicule induisant une réduction supplémentaire de l'espace intérieur. Or, afin d'assurer un confort maximal des occupants de l'habitacle du véhicule, un espace intérieur maximum est recherché pour les occupants.

Il est donc requis que les divers équipements du véhicule occupent un volume minimal tout en assurant une fonctionnalité optimale. En particulier, une telle contrainte est répercutée sur l'appareil de chauffage, ventilation et/ou climatisation.

Un des buts de l'invention est donc de répondre favorablement à cette attente, de remédier aux inconvénients précités et de proposer un appareil de chauffage, ventilation et/ou climatisation à encombrement réduit.

Ainsi, l'invention concerne un appareil de chauffage, ventilation et/ou climatisation, notamment pour véhicule automobile, canalisant un flux d'air destiné à être distribué dans un habitacle du véhicule. L'appareil de chauffage, ventilation et/ou climatisation, selon la présente invention, comprend:
- un boîtier d'entrée d'air comportant au moins un conduit d'admission d'air, apte à permettre l'admission du flux d'air dans l'appareil de chauffage, ventilation et/ou climatisation, et
- au moins un conduit de distribution d'air, apte à permettre la diffusion du flux d'air hors de l'appareil de chauffage, ventilation et/ou climatisation.

Selon l'invention, le conduit de distribution d'air est intégré au boîtier d'entrée d'air.

Ainsi, par l'intégration du conduit de distribution d'air au boîtier d'entrée, il est permis de réduire l'encombrement général de l'appareil de chauffage, ventilation et/ou climatisation. Par ailleurs, il est également possible de minimiser les pertes de charges subies par le flux d'air en proposant une configuration du conduit de distribution d'air simplifiée. De plus, la mise en place de conduits de distribution d'air à destination de diverses zones de l'habitacle est simplifiée. Enfin, le montage et l'intégration de l'appareil de chauffage, ventilation et/ou climatisation dans l'habitacle sont plus faciles et aisées.

Par conséquent, la présente invention permet de répondre aux exigences de compacité et d'agencements particuliers des diffuseurs d'air dans les différentes zones de l'habitacle.

Selon un aspect de l'invention, le conduit de distribution d'air est délimitée par une paroi extérieure comportant au moins une déformation localisée. Avantageusement, la déformation localisée loge au moins partiellement le conduit de distribution d'air.

Plus particulièrement, la paroi extérieure du conduit d'admission d'air comporte une première partie présentant une première courbure et au moins une section inversée présentant une deuxième courbure opposée à la première courbure de la première partie du conduit d'admission d'air. Selon une telle configuration, la section inversée définit la déformation localisée logeant au moins partiellement le conduit d'admission d'air.

De plus, selon un exemple de réalisation, la déformation localisée est agencée au niveau d'un conduit d'entrée d'air canalisant le flux d'air depuis une entrée d'air dans le boîtier d'entrée d'air.

Alternativement ou en complément, la déformation localisée est agencée au niveau d'une chambre d'admission du boîtier d'entrée d'air.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue avant en perspective d'un appareil de chauffage, ventilation et/ou climatisation selon la présente invention,
- la figure 2 est une vue arrière en perspective de l'appareil de chauffage, ventilation et/ou climatisation selon la présente invention,
- la figure 3 est une vue de coté de l'appareil de chauffage, ventilation et/ou climatisation selon la présente invention,
- la figure 4 est une vue de détail d'une partie supérieure de l'appareil de chauffage, ventilation et/ou climatisation selon la présente invention,
- la figure 5 est une vue arrière en perspective d'un boîtier d'entrée d'air selon la présente invention, et
- la figure 6 est une vue de coté en perspective et en coupe selon le plan VI-VI de la figure 5 du boîtier d'entrée d'air selon la présente invention.

Sur les différentes figures, sauf indications particulières, les éléments identiques portent les mêmes références et auront les mêmes caractéristiques techniques et des fonctions identiques.

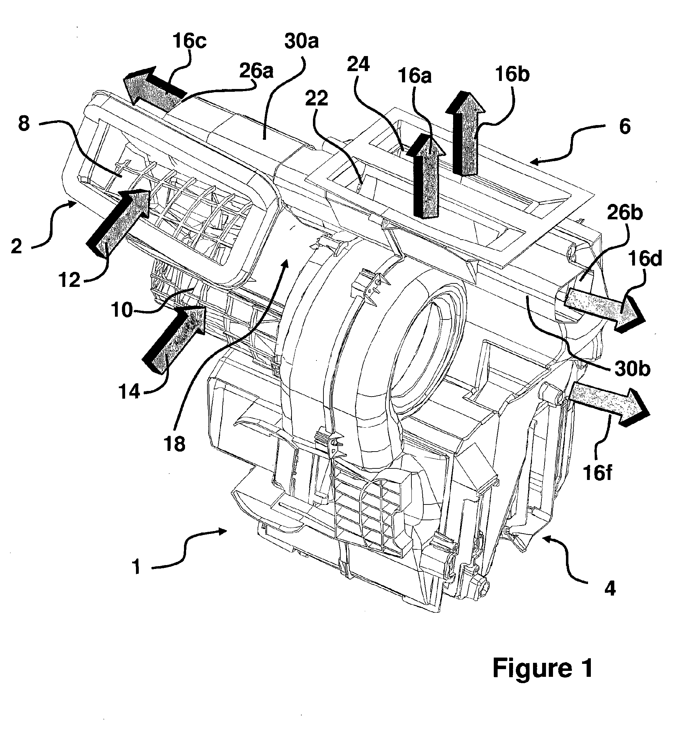

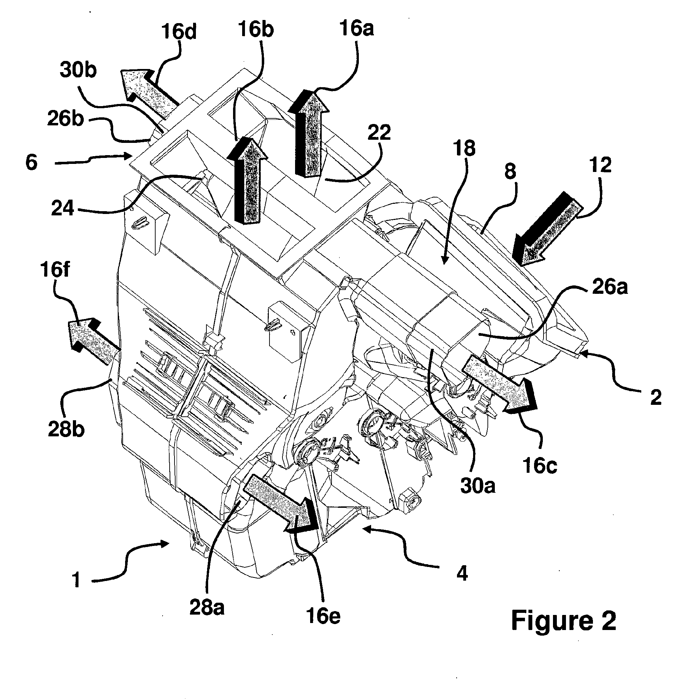

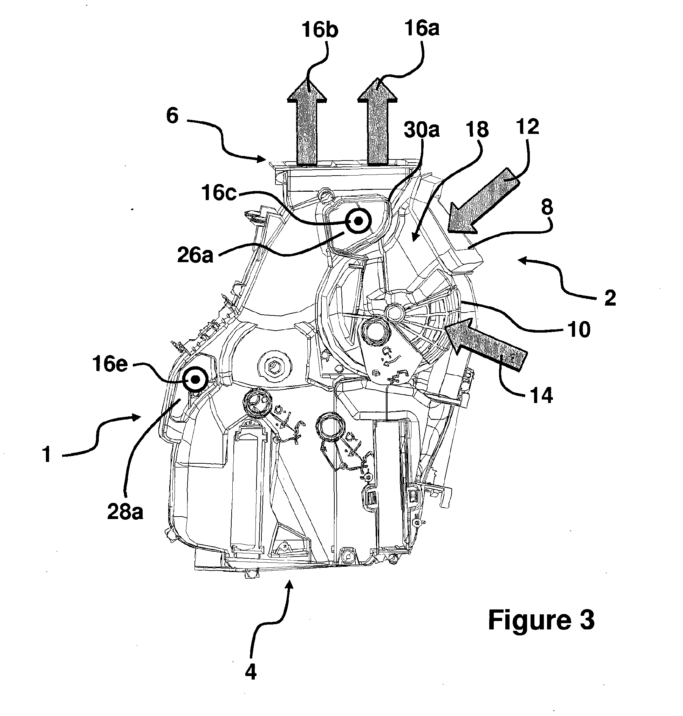

Les figures 1 à 3 sont, respectivement, une vue avant en perspective, une vue arrière en perspective et une vue de coté d'un appareil de chauffage, ventilation et/ou climatisation 1 faisant partie intégrante d'une installation de chauffage, ventilation et/ou climatisation destinée à équiper un véhicule automobile pour le traitement aérothermique d'un flux d'air, apte à être distribué dans un habitacle du véhicule. Le flux d'air distribué permet d'assurer le confort thermique des occupants du véhicule.

A cet effet, l'appareil de chauffage, de ventilation et/ou de climatisation 1 comprend, notamment, un boîtier d'entrée d'air 2, un boîtier de conditionnement thermique 4 et un boîtier de distribution d'air 6.

Le boîtier d'entrée d'air 2 loge un pulseur, non représenté sur les figures, pour faire mettre en mouvement le flux d'air dans l'appareil de chauffage, de ventilation et/ou de climatisation 1. Le flux d'air destiné à être distribué dans l'habitacle du véhicule est un flux d'air extérieur 12 et/ou un flux d'air recirculé 14, admis respectivement, à travers une entrée d'air extérieur 8 et/ou une entrée d'air recirculé 10.

Par suite, le flux d'air extérieur 12 et/ou le flux d'air recirculé 14, admis dans le boîtier d'entrée d'air 2, constitue un flux d'air intérieur 16 circulant et traité thermiquement dans l'appareil de chauffage, de ventilation et/ou de climatisation 1. Le flux d'air intérieur 16 est le flux d'air destiné à être distribué dans l'habitacle du véhicule pour le confort thermique des occupants du véhicule.

L'appareil de chauffage, ventilation et/ou climatisation 1 comprend des parois définissant une enveloppe à l'intérieur de laquelle est agencé l'ensemble des composants nécessaires au traitement aérothermique du flux d'air, notamment le flux d'air intérieur 16.

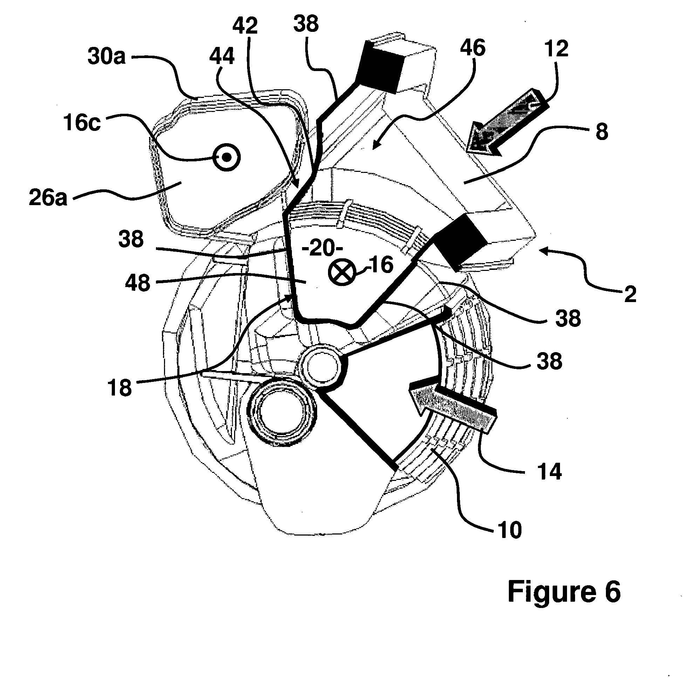

Le flux d'air, destiné à être distribué dans l'habitacle du véhicule et composé par le flux d'air extérieur 12 et/ou le flux d'air recirculé 14, est canalisé, dans le boîtier d'entrée d'air 2, par un conduit d'admission d'air 18 reliant l'entrée d'air extérieur 8 et/ou l'entrée d'air recirculé 10 à une ouverture 20 du boîtier de conditionnement thermique 4, visible sur la figure 6. L'ouverture 20 est disposée sur une paroi du boîtier de conditionnement thermique 4 et permet le passage du flux d'air depuis le boîtier d'entrée d'air vers le boîtier de conditionnement thermique 4.

Afin de conditionner le flux d'air, tel que le flux d'air intérieur 16, à la température requise, le boîtier de conditionnement thermique 4 loge des moyens de traitement thermiques, tels qu'un évaporateur, un radiateur, des volets, ...

Par suite, en sortie du boîtier de conditionnement thermique 4, le flux d'air intérieur 16, à température désirée, pénètre dans le boîtier de distribution d'air 6, afin d'être réparti et distribué dans diverses zones de l'habitacle du véhicule.

Pour ce faire, le boîtier de distribution d'air 6 comporte plusieurs sorties de distribution. En particulier, selon l'exemple de réalisation présenté sur les figures 1 et suivantes, le boîtier de distribution d'air 6, et donc l'appareil de chauffage, de ventilation et/ou de climatisation 1, comporte :
- une sortie dégivrage 22, destinée à diffuser le flux d'air au niveau d'un pare-brise du véhicule, ou flux d'air de dégivrage 16a,
- au moins une sortie aération 24, destinée à diffuser le flux d'air au niveau d'au moins un aérateur disposé en partie centrale d'une planche de bord du véhicule, ou flux d'air d'aération 16b,
- au moins une sortie latérale 26, en particulier une sortie latérale droite 26a et une sortie latérale gauche 26b, destinée à diffuser le flux d'air au niveau d'au moins un aérateur disposé en partie latérale de la planche de bord du véhicule, ou flux d'air d'aération latérale, en particulier un flux d'air d'aération latérale droite 16c et un flux d'air d'aération latérale gauche 16d, et
- au moins une sortie "pieds" 28, en particulier une sortie "pieds" droite 28a et une sortie "pieds" gauche 28b, destinée à diffuser le flux d'air intérieur 16 au niveau d'au moins une sortie d'air disposée en partie inférieure de l'habitacle du véhicule, ou flux d'air "pieds", en particulier un flux d'air "pieds" droit 16e et un flux d'air "pieds" gauche 16f.

Par ailleurs, selon une variante de réalisation non représentée, le boîtier de distribution d'air 6, et donc l'appareil de chauffage, de ventilation et/ou de climatisation 1, peut également comporter des sorties d'air additionnelles pour diffuser le flux d'air, tel que le flux d'air intérieur 16, vers d'autres zones de l'habitacle, notamment les zones arrières de l'habitacle.

Afin de canaliser le flux d'air depuis le boîtier de distribution d'air 6 vers les diverses zones de l'habitacle du véhicule, des diffuseurs d'air, destinés à distribuer le flux d'air au niveau des diverses zones de l'habitacle, sont reliés aux différentes sorties d'air (i.e la sortie dégivrage 22, la sortie aération 24, la sortie latérale 26, la sortie pieds 28, ...) par des conduits de distribution d'air, notamment un conduit d'air latéral droit 30a et un conduit d'air latéral gauche 30b.

Sur les figures 1 à 3, seuls sont représentés le conduit d'air latéral droit 30a et le conduit d'air latéral gauche 30b. Toutefois, la présente invention n'est pas limitée au conduit d'air latéral droit 30a et/ou au conduit d'air latéral gauche 30b. Elle présente un intérêt pour tous types de conduits et/ou équipements agencés dans l'environnement proche de l'appareil de chauffage, de ventilation et/ou de climatisation 1.

Par 'conduits et/ou équipements agencés dans l'environnement proche', il faut comprendre les éléments disposés à proximité de l'appareil de chauffage, de ventilation et/ou de climatisation 1 et dont l'encombrement extérieur est susceptible d'interférer avec les parois de l'appareil de chauffage, de ventilation et/ou de climatisation 1.

Afin d'augmenter la compacité de l'appareil de chauffage, de ventilation et/ou de climatisation 1, la présente invention prévoit un agencement particulier du boîtier d'entrée d'air 2. Plus spécifiquement, le boîtier d'entrée d'air 2 est conformé, au moins localement, de sorte à permettre le passage du conduit d'air latéral droit 30a.

L'exemple de réalisation présenté sur les figures est propre à un appareil de chauffage, de ventilation et/ou de climatisation 1 destiné à équiper un véhicule automobile à conduite à droite et disposant donc d'un volant à gauche. Dans cette configuration, le boîtier d'entrée d'air 2 est disposé sur le coté droit de l'appareil de chauffage, de ventilation et/ou de climatisation 1.

Dans le cadre d'un véhicule automobile à conduite à gauche et disposant donc d'un volant à droite, le boîtier d'entrée d'air 2 étant disposé sur le coté gauche de l'appareil de chauffage, de ventilation et/ou de climatisation 1, la présente invention s'appliquera au boîtier d'entrée d'air 2 conformé, au moins localement, de sorte à permettre le passage du conduit d'air latéral gauche 30b.

Alternativement, selon un autre exemple de réalisation, la position du le boîtier d'entrée d'air 2 reste inchangée que le véhicule automobile soit à conduite à gauche ou à conduite à droite.

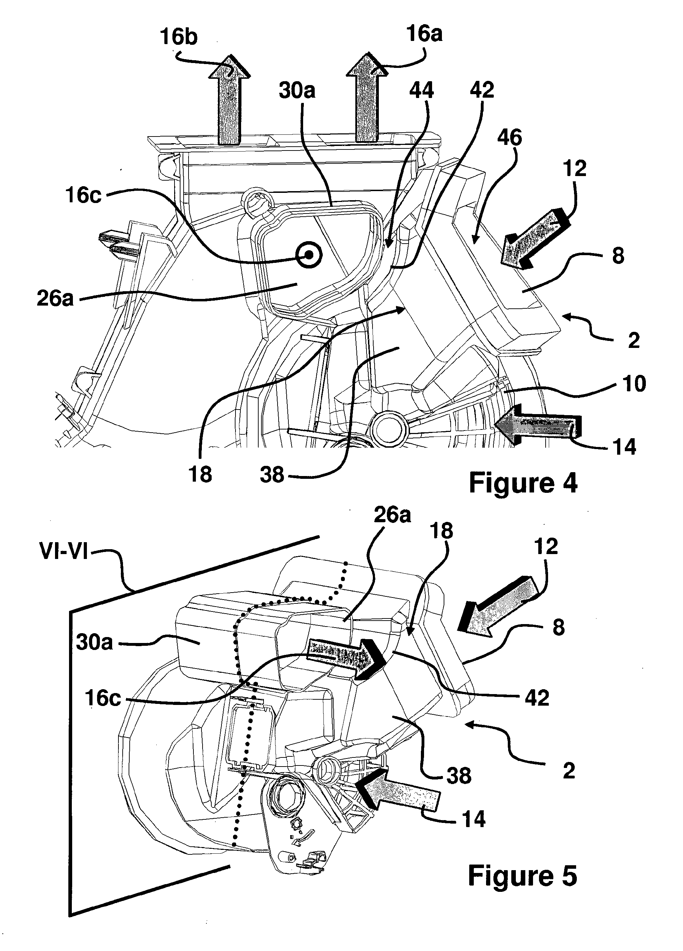

On se reporte dorénavant aux figures 4 à 5 afin de détailler la configuration du le boîtier d'entrée d'air 2 selon la présente invention. Plus spécifiquement, les figures 4 à 5 sont, respectivement, une vue de détail d'une partie supérieure de l'appareil de chauffage, ventilation et/ou climatisation 1 et une vue arrière en perspective du boîtier d'entrée d'air 2.

Le boîtier d'entrée d'air 2 comporte une paroi extérieure 38 délimitant le conduit d'admission d'air 18. Selon la présente invention, la paroi extérieure 38 du conduit d'admission d'air 18 comprend au moins une première partie de conduit et une deuxième partie de conduit.

Plus spécifiquement, la première partie de conduit est configurée de sorte à s'étendre selon une première courbure. Notamment, la première courbure est telle que la première partie de conduit présente une surface convexe ou bombée. Alternativement, au moins localement, la première courbure de la première partie de conduit d'admission d'air 18 peut être nulle.

De plus, selon la présente invention, la paroi extérieure 38 délimitant le conduit d'admission d'air 18 selon la présente invention comporte au moins un point d'inflexion. Le point d'inflexion constitue l'intersection entre la première partie de conduit et la deuxième partie de conduit. Ainsi, la deuxième partie de conduit définit au moins une section inversée 42 du conduit d'admission d'air 18, de telle sorte que la section inversée 42 s'étende selon une deuxième courbure, opposée à la première courbure de la première partie du conduit d'admission d'air 18. Ainsi, la section inversée 42 du conduit d'admission d'air 18 présente une surface concave.

En particulier, selon l'exemple de réalisation présenté sur les différentes figures, toutes les parties du conduit d'admission d'air 18, à l'exception de la section inversée 42 du conduit d'admission d'air 18, s'étendent selon la première courbure afin d'être de forme convexe, tournée vers l'entrée d'air extérieur 8 et vers l'entrée d'air recirculé 10.

A l'inverse, la section inversée 42 du conduit d'admission d'air 18 s'étend selon la deuxième courbure afin d'être de forme concave tournée à l'opposée de l'entrée d'air extérieur 8 et de l'entrée d'air recirculé 10.

Préférentiellement, l'entrée d'air extérieur 8, respectivement l'entrée d'air recirculé 10, est disposée sur la première partie de conduit d'admission d'air 18, sur la partie convexe de la paroi extérieure 38.

La section inversée 42 définit donc une déformation localisée 44 du conduit d'admission d'air 18. Une telle déformation localisée 44 assure un passage extérieur au conduit d'admission d'air 18.

La déformation localisée 44 permet, en particulier, le passage de tous types de conduits et/ou équipements agencés dans l'environnement proche de l'appareil de chauffage, de ventilation et/ou de climatisation 1, sans interférer avec les parois délimitant l'appareil de chauffage, de ventilation et/ou de climatisation 1.

Avantageusement, la déformation localisée 44 permet la mise en place du conduit d'air latéral droit 30a et/ou du conduit d'air latéral gauche 30b tout en réduisant l'encombrement général du boîtier d'entrée d'air 2 et du boîtier de distribution d'air 6. En alternative ou en complément, la déformation localisée 44 permet le passage d'un élément structurel, telle qu'une poutre de renfort du véhicule. A cet effet, selon un autre exemple de réalisation, une ou plusieurs autres déformations localisées 44 du conduit d'admission d'air 18 peuvent être réalisées afin d'assurer le passage de plusieurs conduits et/ou équipements agencés dans l'environnement proche de l'appareil de chauffage, de ventilation et/ou de climatisation 1.

Selon la présente invention, la déformation localisée 44 crée une réduction de la section du conduit d'admission d'air 18. Toutefois, elle permet de conserver la section de passage du conduit d'air latéral droit 30a et/ou du conduit d'air latéral gauche 30b.

Ainsi, le conduit d'air latéral droit 30a, respectivement le conduit d'air latéral gauche 30b, peut être intégré facilement dans l'appareil de chauffage, de ventilation et/ou de climatisation 1.

Par conséquent, afin de répondre aux exigences de compacité et d'agencement particuliers des diffuseurs d'air dans les différentes zones de l'habitacle, la présente invention apporte un avantage conséquent.

Par ailleurs, grâce à la déformation localisée 44 du conduit d'admission d'air 18, le conduit d'air latéral droit 30a, respectivement le conduit d'air latéral gauche 30b, peut être configuré de façon à limiter les pertes de charges. En étant intégré dans le passage extérieur définit par la déformation localisée 44 du conduit d'admission d'air 18, le conduit d'air latéral droit 30a, respectivement le conduit d'air latéral gauche 30b, ne comporte pas de changements brusques de l'écoulement du flux d'air intérieur 16.

Te que présenté à la figure 6, selon une vue de coté en perspective et en coupe du boîtier d'entrée d'air 2 selon la présente invention, selon le plan VI-VI de la figure 5, le conduit d'admission d'air 18 est constitué par au moins un canal d'entrée d'air 46 et une chambre d'admission 48.

Plus particulièrement, la chambre d'admission 48 est disposée, selon le sens d'écoulement du flux d'air, en particulier le flux d'air extérieur 12 et/ou du flux d'air recirculé 14, en aval de l'entrée d'air extérieur 8 et/ou de l'entrée d'air recirculé 10. Ainsi, la chambre d'admission 48 permet de collecter le flux d'air extérieur 12 et/ou le flux d'air recirculé 14 afin de définir le flux d'air intérieur 16.

Par suite, la chambre d'admission 48 communique avec le boîtier de conditionnement thermique 4, par l'ouverture 20.

Par ailleurs, le canal d'entrée d'air 46 permet de canaliser le flux d'air extérieur 12 et/ou le flux d'air recirculé 14. A cet effet, le canal d'entrée d'air 46 est disposé, selon le sens d'écoulement du flux d'air extérieur 12 et/ou du flux d'air recirculé 14, en amont de la chambre d'admission 48.

Préférentiellement, le canal d'entrée d'air 46 est une portion de la première partie de conduit d'admission d'air 18 dont la première courbure est nulle.

Selon divers modes de réalisation de la présente invention, la section inversée 42 est agencée sur la paroi extérieure 38 délimitant le conduit d'admission d'air 18.

Selon un exemple particulier, la section inversée 42 est agencée sur la paroi extérieure 38 délimitant le conduit d'admission d'air 18 au niveau de la chambre d'admission 48. En alternative ou en complément, la section inversée 42 est agencée sur la paroi extérieure 38 délimitant le conduit d'admission d'air 18, au niveau du canal d'entrée d'air 46.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment, pris séparément ou en association.

## Revendications

1. Appareil de chauffage, ventilation et/ou climatisation (1), notamment pour véhicule automobile, canalisant un flux d'air destiné à être distribué dans un habitacle du véhicule, l'appareil de chauffage, ventilation et/ou climatisation (1), comprenant
- un boîtier d'entrée d'air (2) comportant au moins un conduit d'admission d'air (18), apte à permettre l'admission du flux d'air dans l'appareil de chauffage, ventilation et/ou climatisation (1), et
- au moins un conduit de distribution d'air (30a, 30b), apte à permettre la diffusion du flux d'air hors de l'appareil de chauffage, ventilation et/ou climatisation (1),
**caractérisé en ce que** le conduit de distribution d'air (30a, 30b) est intégré au boîtier d'entrée d'air (2).

2. Appareil de chauffage, ventilation et/ou climatisation (1) selon la revendication 1, dans lequel le conduit de distribution d'air (30a, 30b) est délimitée par une paroi extérieure (38) comportant au moins une déformation localisée (44).

3. Appareil de chauffage, ventilation et/ou climatisation (1) selon la revendication 2, dans lequel la déformation localisée (44) loge au moins partiellement le conduit d'admission d'air (18).

4. Appareil de chauffage, ventilation et/ou climatisation (1) selon la revendication 2 ou 3, dans lequel la paroi extérieure (38) du conduit d'admission d'air (18) comporte une première partie présentant une première courbure et au moins une section inversée (42) présentant une deuxième courbure opposée à la première courbure de la première partie du conduit d'admission d'air (18).

5. Appareil de chauffage, ventilation et/ou climatisation (1) selon la revendication 4, dans lequel la section inversée (42) définit la déformation localisée (44) logeant au moins partiellement le conduit d'admission d'air (18).

6. Appareil de chauffage, ventilation et/ou climatisation (1) selon l'une quelconques des revendications 2 à 5, dans lequel la déformation localisée (44) est agencée au niveau d'un canal d'entrée d'air (46) canalisant le flux d'air depuis une entrée d'air (8, 10) dans le boîtier d'entrée d'air (2).

7. Appareil de chauffage, ventilation et/ou climatisation (1) selon l'une quelconques des revendications 2 à 6, dans lequel la déformation localisée (44) est agencée au niveau d'une chambre d'admission (48) du boîtier d'entrée d'air (2).

## Patentansprüche

1. Heizungs-, Lüftungs- und/oder Klimagerät (1), insbesondere für ein Kraftfahrzeug, das einen Luftstrom kanalisiert, der zur Verteilung in einem Innenraum des Fahrzeugs bestimmt ist, wobei das Heizungs-, Lüftungs- und/oder Klimagerät (1) enthält
- ein Lufteinlassgehäuse (2), das mindestens einen Luftansaugkanal (18) aufweist, der das Ansaugen des Luftstroms in das Heizungs-, Lüftungs- und/oder Klimagerät (1) ermöglichen kann, und
- mindestens einen Luftverteilungskanal (30a, 30b), der die Verbreitung des Luftstroms aus dem Heizungs-, Lüftungs- und/oder Klimagerät (1) ermöglichen kann,
**dadurch gekennzeichnet, dass** der Luftverteilungskanal (30a, 30b) in das Lufteinlassgehäuse (2) integriert ist.

2. Heizungs-, Lüftungs- und/oder Klimagerät (1) nach Anspruch 1, wobei der Luftverteilungskanal (30a, 30b) von einer Außenwand (38) begrenzt wird, die mindestens eine lokalisierte Verformung (44) aufweist.

3. Heizungs-, Lüftungs- und/oder Klimagerät (1) nach Anspruch 2, wobei der Luftansaugkanal (18) zumindest teilweise in der lokalisierten Verformung (44) untergebracht ist.

4. Heizungs-, Lüftungs- und/oder Klimagerät (1) nach Anspruch 2 oder 3, wobei die Außenwand (38) des Luftansaugkanals (18) einen ersten Teil mit einer erste Krümmung und mindestens einen umgekehrten Abschnitt (42) aufweist, der eine zweite Krümmung entgegengesetzt zur ersten Krümmung des ersten Teils des Luftansaugkanals (18) aufweist.

5. Heizungs-, Lüftungs- und/oder Klimagerät (1) nach Anspruch 4, wobei der umgekehrte Abschnitt (42) die lokalisierte Verformung (44) definiert, in der der Luftansaugkanal (18) zumindest teilweise untergebracht ist.

6. Heizungs-, Lüftungs- und/oder Klimagerät (1) nach einem der Ansprüche 2 bis 5, wobei die lokalisierte Verformung (44) im Bereich eines Lufteinlasskanals (46) ausgebildet ist, der den Luftstrom von einem Lufteinlass (8, 10) in das Lufteinlassgehäuse (2) kanalisiert.

7. Heizungs-, Lüftungs- und/oder Klimagerät (1) nach einem der Ansprüche 2 bis 6, wobei die lokalisierte Verformung (44) im Bereich einer Ansaugkammer (48) des Lufteinlassgehäuses (2) ausgebildet ist.

## Claims

1. Heating, ventilation and/or air-conditioning system (1), notably for a motor vehicle, channelling a flow of air that is intended to be distributed to the interior of the vehicle, the heating, ventilation and/or air-conditioning system (1) comprising:
- an air inlet housing (2) comprising at least one air intake duct (18) able to allow the flow of air to enter the heating, ventilation and/or air-conditioning system (1), and
- at least one air distribution duct (30a, 30b) able to allow the flow of air to be disseminated from the heating, ventilation and/or air-conditioning system (1),
**characterized in that** the air distribution duct (30a, 30b) is incorporated into the air inlet housing (2).

2. Heating, ventilation and/or air-conditioning system (1) according to Claim 1, in which the air distribution duct (30a, 30b) is delimited by an exterior wall (38) comprising at least one localized deformation (44).

3. Heating, ventilation and/or air-conditioning system (1) according to Claim 2, in which the localized deformation (44) at least partially houses the air intake duct (18).

4. Heating, ventilation and/or air-conditioning system (1) according to Claim 2 or 3, in which the exterior wall (38) of the air intake duct (18) has a first part with a first curvature and at least one reversed section (42) having a second curvature which is the opposite of the first curvature of the first part of the air intake duct (18).

5. Heating, ventilation and/or air-conditioning system (1) according to Claim 4, in which the reversed section (42) defines the localized deformation (44) that at least partially houses the air intake duct (18).

6. Heating, ventilation and/or air-conditioning system (1) according to any one of Claims 2 to 5, in which the localized deformation (44) is positioned in the region of an air inlet passage (46) that channels the flow of air from an air inlet (8, 10) into the air inlet housing (2).

7. Heating, ventilation and/or air-conditioning system (1) according to any one of Claims 2 to 6, in which the localized deformation (44) is arranged in the region of an intake chamber (48) of the air inlet housing (2).
